# EUROPEAN PATENT SPECIFICATION

(11) **EP 1 887 777 B1**
(45) Date of publication and mention of the grant of the patent: **04.12.2013**
(21) Application number: 07111893.9
(22) Date of filing: 06.07.2007
(51) Int. Cl.: H04N 1/00

(54) **Printing apparatus, printing setting screen display method and print setting screen display program**
Druckvorrichtung sowie Verfahren und Programm zur Bildschirmanzeige der Druckeinstellungen
Appareil d'impression, procédé et programme d'affichage d'écran de configuration d'impression

(30) Priority: 11.08.2006 JP 2006220115
(43) Date of publication of application: 13.02.2008
(73) Proprietor: Konica Minolta Business Technologies, Inc., Tokyo 100-0005 (JP)
(72) Inventor: Suzue, Tadashi c/o Konica Minolta Business Technologies, Inc., Tokyo 192-8505 (JP)
(74) Representative: Gille Hrabal

(56) References cited:
- EP-A- 1 130 480
- JP-A- 2002 205 440

## Description

### BACKGROUND

### 1. Technical Field

The present invention relates to a printing apparatus having a setting screen for print conditions, and a print setting screen display method and a print setting screen display program for displaying the setting screen for setting the print conditions.

### 2. Description of Related Art

In recent years, a printing apparatus such as a printer and photocopier is based on advanced control technology and data processing technology, and a plurality of diversified functions are incorporated in the printing apparatus. The user of such a multi-function printing apparatus is required to perform a great number of operations to select functions and to set conditions. To meet this requirement, such a multi-function printing apparatus is provided with a display section to display many functions or print conditions such as execution conditions, and an input section such as a keyboard for setting the print condition displayed on the display apparatus. They are arranged to provide user interfaces.

In the case of such a display section for user interface, many functions and the print conditions such as execution conditions must be displayed in the display area of limited area. For this purpose, the conventional photocopier has used a hierarchical menu and wizard format to display the print condition setting screen. However, this fails to provide an easy means for the user to grasp all the print conditions at a glance. A problem is found in the visibility for the confirmation of print condition setting. When there is a problem with visibility, the user is required to perform complicated operations to set the print condition. If the user is a skilled operator, print conditions can be set quickly even if there is need for complicated operations.
For a beginner, however, this will raises an operability problem, and quick setting of the print condition will be difficult.

To solve this problem in the conventional art, the following techniques have been disclosed. In one of these techniques, a setting item check screen is provided in order to enhance visibility for the confirmation of the print condition setting. When a change has occurred during the checking of the setting item, the system jumps from a check screen to a designation item setting screen. Upon completion of setting, the system goes back to the check screen by one operation (e.g., refer to Unexamined Japanese Patent Application Publication No. 2000-94789). In another technique, the system jumps to the check screen of the setting item by a check key when setting the layered menu.
If the setting has been changed on the layered menu, a setting completion button is pressed. Then the system goes back to the check screen so that immediate confirmation can be made (e.g., Unexamined Japanese Patent Application Publication No. 2003-266866). These techniques have been proposed, and use of such a check screen disclosed therein improves the visibility. In a further technique having been disclosed, the functions and execution conditions of high-order hierarchy are arranged in the display area separated into several segments, and the segments are formulated in a matrix to improve visibility (e.g., Unexamined Japanese Patent Application Publication No. 2004-282401). Further, to simplify the operation, a tab format operation screen is used, and the order of operation is indicated by means of gradation. Setting items are sequentially displayed, as in the wizard format (e.g., Unexamined Japanese Patent Application Publication No. 2001-246819). Further, to avoid operation errors through simplified operation procedures, at the time of merging the jobs, a decision step is taken to determine the possibility of merging in response to the job setting data that is classified into three types. The jobs that cannot be merged are crosshatched to ensure that the merging function cannot be selected (e.g., Unexamined Japanese Patent Application Publication No. 2003-174529). Further, when an MIB (Management Information Base) is used to set the device, unwanted settings are displayed in gray (e.g., Unexamined Japanese Patent Application Publication No. H10-312258). These proposals have been made in the conventional art. These techniques provide an easy-to-use operation screen for both the beginners and skilled operators, when they use one and the same setting screen.

However, mere preparation of a check screen is not sufficient. Namely, much time and effort are required for the user to access the check screen, and the visibility is insufficient since the setting screen and setting content can be matched with each other only through the check screen. Further, even when the segments are formulated into a matrix, a layered menu will result. This leads to poor visibility. Further, when there are minute differences according to each job, the setting order differs according to each operator; thus, user operability may be deteriorated if a wizard format is used. The tab format cannot ensure grasping of all the settings of the print conditions at a glance. Moreover, if only the number of items to be selected by the user is reduced using the mutual job conditions and MIB procedure, it is difficult to improve the visibility for confirming the setting of the print condition, although possible user errors are reduced.

The object of the present invention is to solve the aforementioned problems and to provide a printing apparatus capable of providing a display for ensuring that the setting and confirmation of the print condition can be performed at one view, and the items that cannot be set simultaneously are disabled so that they cannot be selected.

### SUMMARY

To achieve at least one of the aforementioned objects, a printing apparatus reflecting one aspect of the present invention is provided with a display section to display a screen for setting print condition; and a display control section which controls to display in such a way that a plurality of print condition items are displayed in a first display area on the screen, and in a case where a user has selected a plurality of items out of the print condition items displayed in the first display area, setting condition contents related to the selected print condition items are laid out in a second display area different from the first display area; wherein the display control section determines whether each of the print condition items having been selected can coexist with an other print condition item different from the each of the selected print condition items, and if not, controls the other print condition item not to be selectable from the first display area.

In a printing apparatus reflecting another aspect of the present invention, the aforementioned display control section controls to display the selected items in a lattice-like arrangement.

In a printing apparatus reflecting still another aspect of the present invention, in a case where a plurality of print condition items have been selected by the user, the display control section refers to predetermined printing procedures, and controls to display, in the second display area, the setting condition contents of the selected print condition items.

In a printing apparatus reflecting a further aspect of the present invention, the display control section deletes the other print condition item that cannot coexist from the first display area.

In an apparatus representing a still further aspect of the present invention, the display control section grays out the other print condition item that cannot coexist in the first display area.

### BRIEF DESCRIPTION OF THE DRAWINGS

These and other objects, advantages and features of the invention will become apparent from the following description thereof taken in conjunction with the accompanying drawings in which:
Fig. 1 is a block diagram representing the printing apparatus of the present invention;
Fig. 2 is a schematic diagram representing the screen used to set the print condition in the present invention;
Fig. 3 is an explanatory diagram of a prohibition table; and
Fig. 4 is a flowchart showing the flow of the display of the screen in setting the print condition.

### DETAILED DESCRIPTION OF THE PREFERRED EMBODIMENTS

### [First embodiment]

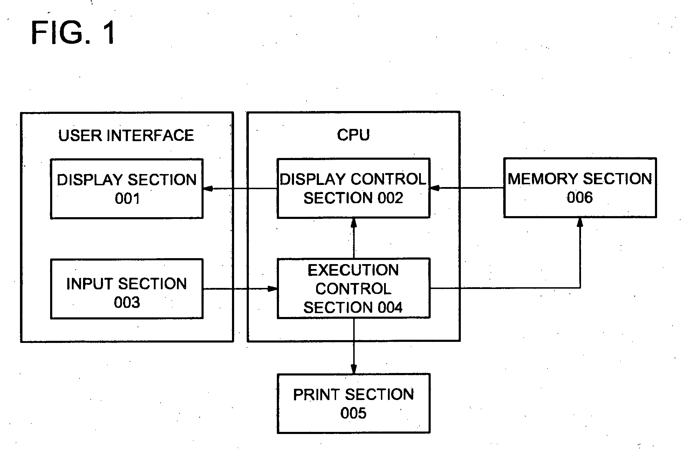

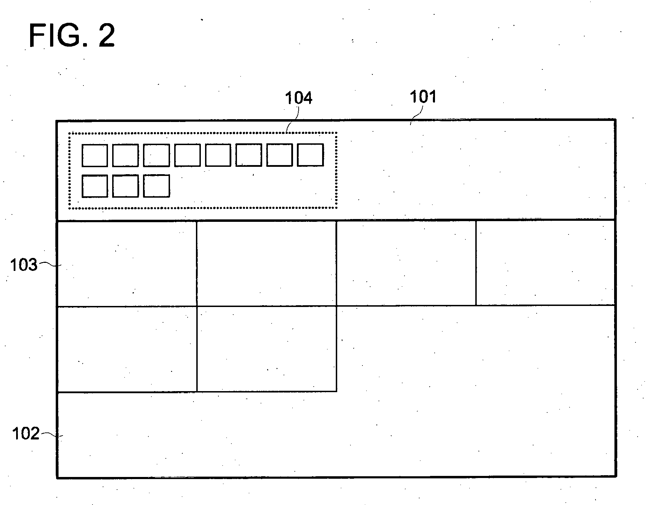

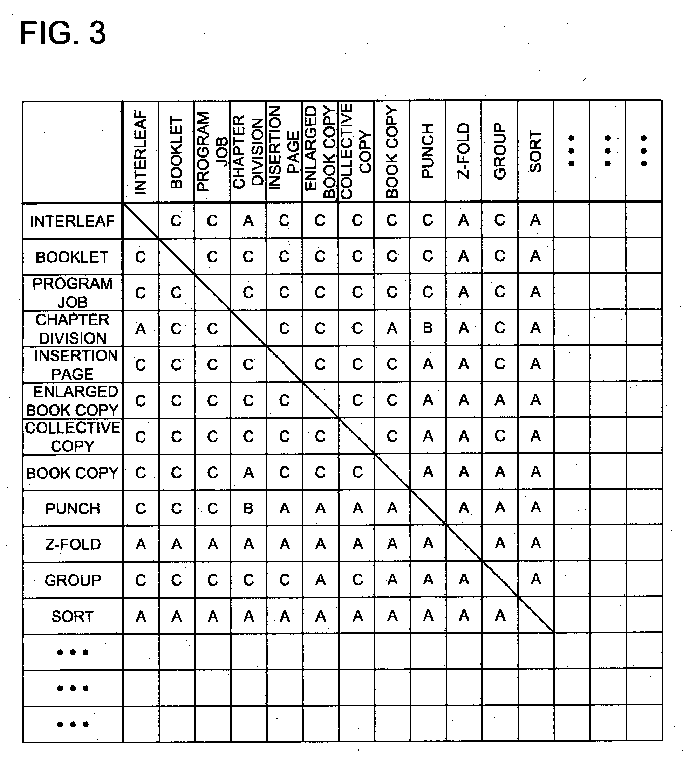

The following describes the printing apparatus as a first embodiment of the present invention with reference to Figs. 1, 2, and 3. Fig. 1 is a block diagram representing the printing apparatus of the present invention. Fig. 2 is a schematic diagram representing the screen used to set the print condition in the present invention. Fig. 3 is an explanatory diagram of a prohibition table. As shown in Fig. 1, the printing control apparatus of the present invention includes a display section 001, a display control section 002, an input section 003, an execution control section 004, a printing section 005 and a storage section 006. In this case, the display section 001 denotes a monitor and others, and the input section 003 indicates a keyboard and mouse. Both the display section 001 and the input section 003 are user interfaces. Further, the display control section 002 and execution control section 004 are made up of a CPU (Central Processing Unit). The storage section 006 represents a hard disk and others. The printing section 005 is a device actually engaged in image printing such as a printer.

In the first place, the display control section 002 generates the region of the display screen in three areas, namely, a first display area 101 (area 101 in Fig. 2), a second display area 102 (area 102 in Fig. 2) and a plurality of small areas 103 (areas 103 in Fig. 2) arranged in a lattice-like form in the second display area 102. This is kept as coordinate information.

The display control section 002 displays the print condition item as an icon 104 in the first display area 101 (the portion enclosed by 104 in Fig. 2). In this case, the print condition item represents the type of function to be set on the printing apparatus, and is exemplified by:
application setting items for the interleaf, booklet, program job, chapter division, insertion page, enlarged book copy, collective copy and page book copy;
output setting items for punch, Z-fold, group and sorting;
document setting items for document setting direction, document image quality, special document and regular/irregular document sizes;
sheet setting items for selecting the sheet size; and
magnification setting items for optional desired magnification and fixed magnification.

In the present embodiment, the display control section 002 assigns each of these setting items with one icon 104. Further, the display control section 002 arranges an icon 104 for each classification of the setting, and displays it on the display section 001. This status is given in the initial screen for setting the print condition. In the following description, the print condition item refers to the type of the aforementioned print condition.

Then, in response to the print condition selected from the icon 104 (the icon displayed in the representation area 101 indicates the print condition item) displayed in the first display area 101 from the initial screen by the user, the display control section 002 refers to the prohibition table stored in the storage section 006 shown in Fig. 3, and acquires the other print conditions (hereinafter referred to as "prohibited item") that cannot be executed compatibly with the print condition selected by the user. In this case, the Table in Fig. 3 corresponds to a certain print condition and represents the print condition that cannot coexist with its print condition. "C" is assigned to the print condition that cannot coexist with the print condition given on the top end with reference to the print condition displayed on the left end. "B" is assigned to the print condition that can coexist with its print condition in a restricted environment. "A" is given to the print condition that can coexist with its print condition free of any restriction.

The display control section 002 controls so that the display of the icon 104 corresponding to the prohibited item having been obtained is removed from the first display area 101 of the display section 001. In this Example, removal of the icon 104 disables use of the prohibited item by the user. It is possible to use the method of merely graying out the icon 104 corresponding to the prohibited item.

When the user cancels the already set print condition, the display control section 002 receives the cancel instruction of the print condition to be canceled from the input section 003, and refers to the prohibition table of the printing apparatus to acquire the prohibited item that cannot coexist only with the print condition to be cancelled, out of the print conditions that cannot coexist with each of the currently set print conditions. Then the display of the icon 104 corresponding to the prohibited item is again displayed on the display section 001. Thus, the print condition can be selected by the user again. In the present Example, the user employs the input section 003 to click on the button for closing the display of the condition content shown in the small area 103 showing the condition content, whereby the cancel instruction of the print condition is sent.

Then the display control section 002 receives the print condition selected out of the icons 104 being displayed in the first display area 101 from the initial screen by the user, and allows the display section 001 to display the setting condition content of the print condition stored in the storage section 006, in the small area 103 at the leading edge contained in the second display area 102. In this Example, the small area 103 at the leading edge refers to the left top end. The sequence of the small area 103 is such that the sequential arrangement goes to the right, starting from the small area 103 at the leading edge. Next to the small area 103 on the right end comes the small area 103 on the left end one row below. This arrangement is repeated until the sequence of the small areas 103 is determined. For the print condition that can be executed in a restricted environment in conformity to the prohibition table, the display control section 002 allows the condition content without the restricted portion to be displayed on the display section 001. The user employs the display of the setting condition content given in the small area 103 to set the print condition through the input section 003.

In order to set other print conditions after having set some of the print conditions, the user has employed the input section 003 to specify the icons 104 corresponding to the predetermined print condition items, out of the icons 104 shown in the first display area 101. In this case, the display control section 002 shifts the sequence of the setting condition contents being displayed by one unit, and displays them in the small area 103. At the same time, in response to the print condition specified by the user, the display control section 002 allows the specified setting condition content to be displayed in the small area 103 at the leading edge. In this case, the icon 104 displayed in the first display area 101 refers to all the icons 104 displayed on the initial screen, except for the icons 104 of the prohibited items corresponding to the print condition item selected by the user.

When the user cancels the print condition already been set, the display control section 002 receives the cancel instruction of the print condition from the user having used the input section 003, and removes the display of this setting condition content from the small area 103 where the setting condition content of the print condition is displayed. The sequence of the condition contents being displayed in the small area 103 in the order after the small area 103 where this condition content has been displayed are shifted forward by one unit, and display is given on the display section 001. As described above, in the present Example, the sequence of the print condition 103 is shifted to prevent the gap from occurring. If there is a change, during the process of setting, in the position where the setting condition content is displayed, usability will be deteriorated. To prevent this, the display can be made without the position of the print condition 103 being changed.

As described above, after the user has set a plurality of print conditions, execution control section 004 receives the signal for confirming the print conditions set by the user through the input section 003, and allows the printing section 005 to print an image, based on the setting condition content of the print condition having been set.

When the user has employed the input section 003 to click on the Cancel button (not illustrated) as a button for canceling all the print conditions which are displayed on the display section 001 and are already set, the display control section 002 cancels all the setting condition content being displayed, and allows the initial screen to appear.

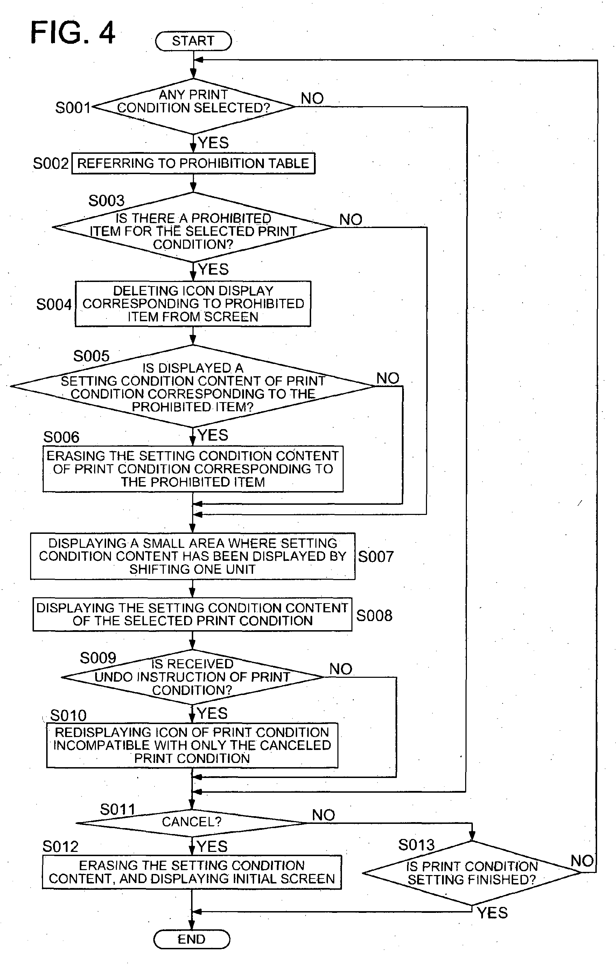

In this case, the display control section 002 and execution control section 004 are made up of a CPU for performing the aforementioned operation and executing the program in conformity to the flow of Fig. 4. To put it more specifically, the CPU loads the program stored in the ROM (Read Only Memory) into the RAM (Random Access Memory), and executes the aforementioned program, thereby constituting the display control section 002 and execution control section 004. In the present embodiment, the prohibition table is stored in the aforementioned ROM and may constitute part of the aforementioned program.

Referring to Fig. 4, the following describes the flow of the setting of the print condition and display of the setting screen in a printing apparatus of the present Example. Fig. 4 is a flowchart showing the flow of the display of the screen in setting the print condition. In the flowchart of Fig. 4, the display control section 002 generates the region of the display screen in three areasa first display area 101, second display area 102 and a plurality of small areas 103 in the second display area 102. This is kept as coordinate information. Further, the display control section 002 allows the icon 104 for print condition item to be displayed on the first display area 101, and the initial screen to be displayed on the display section 001. From this status, the operation starts.

Step S001: The display control section 002 determines whether or not the print condition to be from the initial screen has been selected by the user or not. If the print condition has been selected, the system proceeds to Step S002. If not, the system proceeds to Step S011.

Step S002: The display control section 002 refers to the prohibition table.

Step S003: In response to the print condition having been selected, the display control section 002 determines whether or not there is a prohibited item corresponding to that print condition. If there is a corresponding prohibited item, the system goes to the Step S004. If not, the system goes to the Step S007.

Step S004: The display control section 002 controls so that the display of the icon 104 corresponding to the prohibited item is visually deleted (or removed) from the first display area 101.

Step S005: In response to the print condition being selected, the display control section 002 determines whether or not there is a prohibited item corresponding to that print condition. If there is a corresponding prohibited item, the system goes to the Step S006. If not, the system goes to the Step S007.

Step S006: The display control section 002 controls so that the display of the icon 104 corresponding to the prohibited item is visually deleted (or removed) from the first display area 101.

Step S007: The display control section 002 controls so that the setting condition contents being displayed will be displayed at the position of the small area 103 wherein the contents have been shifted backward one by one.

Step S008: The display control section 002 controls so that the setting condition content of the print condition having been selected is displayed in the small area 103 of the leading edge.

Step S009: The display control section 002 determines whether or not the undo instruction of the print condition having been set is received from the user. If the undo instruction is received, the system goes to Step S010. If not, the system goes to Step S011.

Step S010: In response to the undo instruction of the print condition from the user, the display control section 002 controls so that the icon 104 of the prohibited item corresponding to this print condition alone is displayed in the first display area 101.

Step S011: The execution control section 004 determines whether or not the cancel instruction for canceling all the print conditions having been set is received from the user. If the cancel instruction is received from the user, the system goes to Step S012. If not, the system goes to Step S013.

Step S012: The display control section 002 erases display of all the setting condition contents, and allows the initial screen to be displayed on the display section 001.

Step S013: The user determines whether or not the setting of the print condition has been completed. If the setting of the print condition has been fully completed, the user terminates the operation of setting the print condition. When the user further wishes to set the print condition, he/she selects the print condition to be set. In response to this operation, the printing apparatus repeats the procedures from Step S001 through Step S011.

As described above, all the condition contents to be set are displayed on one screen. This allows the user to confirm the settings of the print conditions at a glance, with the result that visibility is enhanced. This eliminates the need of having to click every time the setting of one print condition has terminated, as in the conventional art, so that the frequency of clicking can be reduced. This procedure also eliminates the need of complicated operations in setting the print condition, and ensures easy setting of the print condition according to simple operation procedure. For example, a two-page image is printed on one sheet of transfer paper and punched holes are opened on the left side. When this setting is required, the conventional menu method requires the following complicated procedures: The application setting item button for the print condition item is clicked; the Collective Copy button is clicked from among the images opened thereby; the image opened thereby is used to click the button for displaying a two-page image on one sheet of transfer paper; the ENTER button is clicked; the ENTER button for Collective Copy is clicked; then the output setting button is clicked; out of the images opened thereby, the punched hole button is clicked; the left is clicked using the images opened thereby; the ENTER button is clicked; and the ENTER button for punched hole is clicked. Thus, the setting is now completed by a total of ten click operations, according to the conventional method. By contrast, in the present embodiment, the icon for collective copy of the application setting item is clicked; the button for printing a two-page image on one transfer sheet is clicked, using the displays of the condition contents opened thereby; then the icon of the punched hole of the output setting item is clicked, and the left is clicked from the display of the condition content opened thereby. Thus, the aforementioned four clicking operations terminate all the setting procedures, according to the present embodiment. As described above, when setting two print conditions, six clicking operations can be eliminated (or reduced). As the number of the print conditions increases, the number of clicking operations can be further reduced. By disabling the print condition that cannot be executed compatibly with the selected print condition, there is no need of determining whether or not a plurality of print conditions to be set by the user can be executed compatibly. This allows the print condition to be set by simplified operations.

In the present embodiment, to display the setting condition content, arrangement is made to ensure that there will be no overlap among the displays of the setting condition contents. To enhance convenience by arrangement in order, a lattice-like small area 103 is generated, and each of the setting condition contents is displayed in this small area 103. This can be achieved by any arrangement so long as there is no overlap among the displays of setting condition contents. For example, in the second display area 102, new setting condition contents can be displayed in the area except where the setting condition content is displayed.

### [Second embodiment]

In the printing apparatus of the present embodiment, the positions of the small areas 103 for displaying the condition content in the first embodiment are arranged in the predetermined printing order and are displayed.

In the present embodiment, the document setting is performed first, and then sheet setting is performed. This is followed by the processes of magnification setting, application setting and output setting in that order. Such printing procedures are stored in the storage section 006 in advance by the manufacture of a printing apparatus.
According to this order, small areas 103 are sequentially assigned. This arrangement is given in the ascending order in the process of printing as one goes from left to right. This provides easy identification as to what kind of print condition is located in what position.

In response to the print condition selected by the user from among the icons 102 displayed in the first display area 101, the display control section 002 allows the setting condition content of the designated print condition to be displayed sequentially in the small area 103, based on the order of printing processes stored in the storage section 006. In this case, if the print condition of the procedure corresponding to the position intermediate between the setting condition content being displayed has been designated, the display control section 002 controls so that the setting condition contents of the procedures coming after the selected print condition are shifted one by one to the succeeding small areas 103, and so that they will be displayed. The display control section 002 allows the condition content of the selected print condition to be displayed in the small area 103 which is formed by shifting the setting condition content and which contains no display of setting condition content.

Further, upon receipt of the print condition undo instruction from the user, the display control section 002 permits the display of the setting condition content of this print condition to be deleted from the small area 103. The displays of the setting condition contents located after the small area 103 where the display of the setting condition content has been deleted are shifted one by one to the preceding small areas 103, and each of the setting condition contents are displayed.

Other operations of the printing apparatus of this embodiment are the same as those of the first embodiment.

In the present embodiment, the display of the setting condition content according to the flow of the process of printing is superior in convenience in general, and therefore, setting condition contents are displayed in the order preset by the manufacturer of the printing apparatus. However, there is no restriction to this order. For example, for the convenience of the individual user, it is also possible to make such arrangements that the user designates the order of display and setting condition contents are displayed in that order.

According to the present embodiments, it becomes possible to provide a display for ensuring that the setting and confirmation of the print condition can be performed at one view, and the items that cannot be set simultaneously are disabled so that they cannot be selected. Due to this, users need not switch screens to set each print condition, and can set print conditions with a small number of operation times (frequency of clicking), which is smaller than in the conventional apparatus by the number of switching times. Further, since users are prevented from setting inexecutable setting conditions, possible user errors are reduced. Therefore, can be provided is an easy-to-use improved operability screen for both the beginners and skilled operators, when they use one and the same setting screen.

## Claims

1. A printing apparatus comprising:
a display section (001) to display a screen for setting print condition; and
a display control section (002) which is configured to display in such a way that a plurality of icons each of which represents a print condition item are displayed together in a first display area (101) on the screen, and In a case where a user has selected a plurality of icons out of the plurality of Icons displayed together in the first display area (101), all of a plurality of setting condition contents related to the selected plurality of icons are laid out together in a second display area (102) different from the first display area (101),
wherein the display control section (002) is configured to determine whether each of the print condition items relating to the Icon having been selected can coexist with another print condition item different from the each of the items, and if not, to control an icon relating to the other print condition item not to be selectable from the first display area (101).

2. The printing apparatus of claim 1, wherein the display control section (002) is configured to display all of the plurality of setting condition contents related to the selected plurality of icons in a lattice-like arrangement.

3. The printing apparatus of claim 1 or 2, wherein in a case where a plurality of Icons have been selected by the user, the display control section (002) Is configured to refer predetermined printing procedures, and to display, In the second display area (102), the setting condition contents relatIng to the selected icons based on an order of the predetermined printing procedure.

4. The printing apparatus of claims 1 to 3, wherein the display control section (002) Is configured to delete the icon relating to the other print condition item that cannot coexist from the first display area (101).

5. The printing apparatus of claims 1 to 3, wherein the display control section (002) Is configured to gray out the icon relating to the other print condition Item that cannot coexist in the first display area (101).

6. A print setting screen display method to display a screen for setting print condition, comprising the steps of: displaying a plurality of icons each of which represents a print condition item together in a first display area (101) on the screen;
laying out, in a case where a user has selected a plurality of icons out of the plurality of icons displayed In the first display area (101), all of a plurality of setting condition contents related to the selected plurality of icons print together in a second display area (102) different from the first display area (101); and
determining whether each of the print condition items relating to the icon having been selected can coexist with another print condition item different from the items having been selected, and if not, controlling the other print condition item not to be selectable from the first display area (101).

7. A computer-readable storage medium having a program stored thereon for causing a computer to perform a print setting screen display method to display a screen for setting print condition, the display method comprising the steps of:
displacing a plurality of icons a print condition item together In a first display area (101) on the screen;
laying out, in a case where a user has selected a plurality of Icons out of the plurality of icons displayed In the first display area (101), all of a plurality of setting condition contents related to the selected plurality of icons together in a second display area (102) different from the first display area; and
determining whether each of the print condition items relating to the icon having been selected can coexist, with another print condition item different from the items having been selected, and if not, controlling the other print condition item not to be selectable from the first display area (101).

## Patentansprüche

1. Druckvorrichtung umfassend:
eine Anzeigeabschnitt (001) für eine Bildschirmanzeige zum Einstellen der Druckbedingungen; und
einen Anzeigesteuerabschnitt (002), der zum Anzeigen konfiguriert ist, derart, dass eine Vielzahl von Icons, wovon jedes ein Druckzustandsdetail darstellt, zusammen in einem ersten Anzeigebereich (101) auf dem Bildschirm angezeigt wird, und in einem Falle, in dem ein Anwender eine Vielzahl von Icons aus der Vielzahl von zusammen in dem ersten Anzeigebereich (101) angezeigten Icons gewählt hat, alle aus einer Vielzahl von Einstellbedingungsinhalten, die mit der gewählten Vielzahl von Icons zusammenhängen, zusammen in einem zweiten von dem ersten Anzeigebereich (101) verschiedenen Anzeigebereich (102) angeordnet werden,
wobei ein Anzeigesteuerabschnitt (002) konfiguriert ist, um zu bestimmen, ob jedes der Druckbedingungsdetails bezüglich des Icons, welches gewählt wurde, mit einem anderen von jedem der Details verschiedenen Druckbedingungsdetail koexistieren kann, und falls nicht, um ein Icon bezüglich des anderen Druckbedingungsdetails so zu steuern, dass es nicht aus dem ersten Anzeigebereich (101) wählbar ist.

2. Druckvorrichtung nach Anspruch 1, wobei der Anzeigesteuerabschnitt (002) zum Anzeigen von allen aus der Vielzahl von Einstellungsbedingungsinhalten, die mit der gewählten Vielzahl von Icons zusammenhängen, in einer gitterartigen Anordnung konfiguriert ist.

3. Druckvorrichtung nach Anspruch 1 oder 2, wobei in einem Fall, in dem eine Vielzahl von Icons durch den Anwender gewählt wurde, der Anzeigesteuerabschnitt (002) konfiguriert ist, um sich auf vorbestimmte Druckvorgänge zu beziehen und um im zweiten Anzeigebereich (102) die Einstellungsbedingungsinhalte, die mit dem gewählten Icon zusammenhängen, auf der Basis eines Aufrufs des vorbestimmten Druckvorgangs anzuzeigen.

4. Druckvorrichtung nach Anspruch 1 bis 3, wobei der Anzeigesteuerabschnitt (002) konfiguriert ist, um das Icon, das das andere Druckbedingungsdetail betrifft, welches nicht koexistieren kann, aus dem ersten Anzeigebereich (101) zu löschen.

5. Druckvorrichtung nach Anspruch 1 bis 3, wobei der Anzeigesteuerabschnitt (002) konfiguriert ist, um das Icon, das das andere Druckbedingungsdetail betrifft, welches nicht koexistieren kann, in dem ersten Anzeigebereich (101) auszugrauen.

6. Druckeinstellungsbildschirmanzeigeverfahren für eine Bildschirmanzeige zum Einstellen einer Druckbedingung, umfassend die folgenden Schritte: Anzeigen einer Vielzahl von Icons, wovon jedes ein Druckzustandsdetail darstellt, zusammen in einem ersten Anzeigebereich (101) auf dem Bildschirm;
Anordnen, in dem Fall, wobei ein Anwender eine Vielzahl von Icons gewählt hat, in dem ersten Anzeigebereich (101), alle aus einer Vielzahl von Einstellungsbedingungsinhalten, die mit der gewählten Vielzahl von gedruckten Icons zusammenhängen, in einem zweiten von dem ersten Anzeigebereich (101) verschiedenen Anzeigebereich (102); und
Bestimmen, ob jedes Druckbedingungsdetails bezüglich des Icons, das gewählt wurde, mit einem anderen von jedem der Details verschiedenen Druckbedingungsdetail koexistieren kann, und falls nicht, Steuern des anderen Druckbedingungsdetails, um nicht aus dem ersten Anzeigebereich (101) auswählbar zu sein.

7. Computerlesbares Speichermedium mit einem darin gespeicherten Programm, um den Computer zu veranlassen, ein Druckeinstellungsanzeigeverfahren für eine Bildschirmanzeige zum Einstellen einer Druckbedingung durchzuführen, wobei das Anzeigeverfahren die folgenden Schritte umfasst:
Anzeigen einer Vielzahl von Icons eines Druckbedingungsdetails zusammen in einem ersten Anzeigebereich (101) auf dem Bildschirm;
Anordnen, in einem Fall, in dem an Anwender eine Vielzahl von Icons gewählt hat, in dem ersten Anzeigebereich (101), von allen einer Vielzahl von Einstellungsbedingungsinhalten, die mit der Vielzahl von gewählten Icons zusammenhängen, zusammen in einem zweiten von dem ersten Anzeigebereich (101) verschiedenen Anzeigebereich (102); und
Bestimmen, ob jedes der Druckbedingungsdetails bezüglich des Icons, welches gewählt wurde, mit einem anderen von jedem der Details verschiedenen Druckbedingungsdetail koexistieren kann, und falls nicht Steuern des anderen Druckbedingungsdetails, um nicht aus dem ersten Anzeigebereich (101) auswählbar zu sein.

## Revendications

1. Appareil d'impression comprenant :
une partie d'affichage (001) pour l'affichage à l'écran pour configurer les conditions d'impression ; et
une partie de contrôle d'affichage (002) qui est configurée pour l'affichage de telle manière qu'une pluralité d'icônes dont chacune représente un détail de condition d'empreinte sont affichées ensemble dans une première zone d'affichage (101) sur l'écran, et en cas dans lequel un utilisateur a sélectionné une pluralité d'icônes parmi la pluralité d'icônes affichées ensemble dans la première zone d'affichage (101), l'ensemble d'une pluralité de contenus de conditions de configuration lié à la pluralité d'icônes sélectionnée est arrangé ensemble dans une deuxième zone d'affichage (102) différente de la première zone d'affichage (101),
dans lequel une partie de contrôle d'affichage (002) est configurée pour déterminer si chacun des détails de condition d'impression relatif à l'icône qui a été sélectionnée peut coexister avec un autre détail de condition d'impression différent de chacun des détails, et sinon, pour contrôler une icône liée à l'autre détail de condition d'impression pour qu'il ne soit pas au choix parmi la première zone d'affichage (101).

2. Appareil d'impression selon la revendication 1, dans lequel la partie de contrôle d'affichage (002) est configurée pour l'affichage l'ensemble de la pluralité de contenus de conditions de configuration lié à la pluralité d'icônes sélectionnée dans un arrangement à la manière d'un réseau.

3. Appareil d'impression selon la revendication 1 ou 2, dans lequel en cas dans lequel une pluralité d'icônes a été sélectionnée par l'utilisateur, la partie de contrôle d'affichage (002) est configurée pour se référer aux procédés d'impression prédéterminés et pour afficher, dans la deuxième zone d'affichage (102), les contenus de conditions de configuration lié à l'icône sélectionnée sur la base de la commande du procédé d'impression prédéterminé.

4. Appareil d'impression selon la revendication 1 à 3, dans lequel la partie de contrôle d'affichage (002) est configurée pour supprimer l'icône concernant l'autre détail de condition d'impression qui ne peut pas coexister de la première zone d'affichage (101).

5. Appareil d'impression selon la revendication 1 à 3, dans lequel la partie de contrôle d'affichage (002) est configurée pour engriser l'icône concernant l'autre détail de condition d'impression qui ne peut pas coexister de la première zone d'affichage (101).

6. Procédé d'affichage d'écran de configuration d'impression pour l'affichage à l'écran pour configurer les conditions d'impression, comprenant les étapes consistant à : afficher une pluralité d'icônes dont chacune représente un détail de condition d'empreinte ensemble dans une première zone d'affichage (101) sur l'écran;
arranger, en cas que un utilisateur a sélectionné une pluralité d'icônes dans la première zone d'affichage (101), l'ensemble d'une pluralité de contenus de conditions de configuration lié à la pluralité d'icônes sélectionnée est arrangé ensemble dans une deuxième zone d'affichage (102) différente de la première zone d'affichage (101) ; et
déterminer si chacun des détails de condition d'impression relatif à l'icône qui a été sélectionnée peut coexister avec un autre détail de condition d'impression différent de chacun des détails, et sinon, contrôler l'autre détail de condition d'impression pour qu'il ne soit pas au choix parmi la première zone d'affichage (101).

7. Support de stockage lisible par ordinateur ayant une programme stockée ci-dessus pour amener un ordinateur à mettre en oeuvre un procédé d'affichage d'écran de configuration d'impression pour l'affichage à l'écran pour configurer les conditions d'impression, le procédé d'affichage comprenant les étapes consistant à :
afficher une pluralité d'icônes d'un détail de condition d'empreinte ensemble dans une première zone d'affichage (101) sur l'écran;
arranger, en cas que un utilisateur a sélectionné une pluralité d'icônes dans la première zone d'affichage (101), l'ensemble d'une pluralité de contenus de conditions de configuration lié à la pluralité d'icônes sélectionnée est arrangé ensemble dans une deuxième zone d'affichage (102) différente de la première zone d'affichage (101) ; et
déterminer si chacun des détails de condition d'impression relatif à l'icône qui a été sélectionnée peut coexister avec un autre détail de condition d'impression différent de chacun des détails, et sinon, contrôler l'autre détail de condition d'impression pour qu'il ne soit pas au choix parmi la première zone d'affichage (101).
